# EUROPEAN PATENT APPLICATION

(11) **EP 4 309 915 A1**
(43) Date of publication of application: **24.01.2024**
(21) Application number: 21931719.5
(22) Date of filing: 06.12.2021
(51) Int. Cl.: B60C 1/00, C08C 19/25, C08L 9/00, C08L 101/00, C08K 3/36

(54) **RUBBER COMPOSITION AND TIRE**

(30) Priority: 19.03.2021 JP 2021046551
(71) Applicant: BRIDGESTONE CORPORATION, Chuo-ku Tokyo 104-8340 (JP)
(72) Inventor: SONE, Ryota, Tokyo 104-8340 (JP)
(74) Representative: Marks & Clerk LLP
(86) International application number: PCT/JP2021/044784
(87) International publication number: WO 2022/195977

(57) **Abstract**

Provided is a rubber composition that can achieve excellent on-ice performance and steering stability when used in tires. A rubber composition comprises: a rubber component containing an isoprene-based rubber, and a modified conjugated diene-based polymer that is a reaction product of a conjugated diene-based polymer having an active terminal and a compound [M] containing a total of two or more of at least one selected from a group "-CR¹=N-A¹" and a group "-N=CR¹-A¹", where R¹ is a hydrogen atom or a hydrocarbyl group and A¹ is a monovalent group having an alkoxysilyl group; a filler containing at least silica; and 5 parts by mass or more of a thermoplastic resin with respect to 100 parts by mass of the rubber component.

## Description

### TECHNICAL FIELD

The present disclosure relates to a rubber composition and a tire.

### BACKGROUND

Studless tires with softer tread rubber are conventionally used as tires for safe driving on ice as well as on normal road surfaces. It is known that softening the tread rubber improves the on-ice performance of the tire. However, tires with soft tread rubber typically have a problem in that the steering stability on normal road surfaces deteriorates, and the on-ice performance and steering stability of tires are in a trade-off relationship.

As a tire that solves such a problem, JP 2008-303334 A (PTL 1) proposes a rubber composition containing 0.5 parts by weight to 20 parts by weight of a potassium titanate fiber and 5 parts by weight to 200 parts by weight of carbon black having an iodine adsorption amount of 100 mg/g to 300 mg/g with respect to 100 parts by weight of a rubber component composed of natural rubber and butadiene rubber, and discloses a technique in which the rubber composition is used in a cap tread of a tread having a two-layer structure composed of a cap tread and a base tread to improve on-ice performance (on-ice and on-sow performance) while suppressing a decrease in wear resistance.

WO 2017/221943 A1 (PTL 2) discloses a technique in which at least two diene-based polymers, silica, and carbon black are contained and the blending amounts and modification states of the diene-based polymers are controlled to achieve on-ice performance while suppressing a decrease in wear resistance.

### CITATION LIST

### Patent Literature

PTL 1: JP 2008-303334 A
PTL 2: WO 2017/221943 A1

### SUMMARY

### (Technical Problem)

The techniques disclosed in PTL 1 and PTL 2 are effective in enhancing on-ice performance, but need further improvement in terms of steering stability.

It could therefore be helpful to provide a rubber composition that can achieve excellent on-ice performance and steering stability when used in tires. It could also be helpful to provide a tire having excellent on-ice performance and steering stability.

### (Solution to Problem)

We thus provide the following:
A rubber composition according to the present disclosure comprises: a rubber component containing an isoprene-based rubber, and a modified conjugated diene-based polymer that is a reaction product of a conjugated diene-based polymer having an active terminal and a compound [M] containing a total of two or more of at least one selected from a group "-CR¹=N-A¹" and a group "-N=CR¹-A¹", where R¹ is a hydrogen atom or a hydrocarbyl group and A¹ is a monovalent group having an alkoxysilyl group; a filler containing at least silica; and 5 parts by mass or more of a thermoplastic resin with respect to 100 parts by mass of the rubber component.

The rubber composition with this structure can achieve excellent on-ice performance and steering stability when used in tires.

A tire according to the present disclosure uses the foregoing rubber composition.

The tire with this structure has excellent on-ice performance and steering stability.

### (Advantageous Effect)

It is thus possible to provide a rubber composition that can achieve excellent on-ice performance and steering stability when used in tires. It is also possible to provide a tire having excellent on-ice performance and steering stability.

### DETAILED DESCRIPTION

An embodiment of a rubber composition and a tire according to the present disclosure will be described below.

### <Rubber composition>

A rubber composition according to the present disclosure contains a rubber component, a filler, and a thermoplastic resin.

The components included in the rubber composition according to the present disclosure will be described below.

### (Rubber component)

The rubber component contained in the rubber composition according to the present disclosure contains an isoprene-based rubber, and a modified conjugated diene-based polymer that is a reaction product of a conjugated diene-based polymer having an active terminal and a compound [M] containing a total of two or more of at least one selected from a group "-CR¹=N-A¹" and a group "-N=CR¹-A¹", where R¹ is a hydrogen atom or a hydrocarbyl group, and A¹ is a monovalent group having an alkoxysilyl group.

As a result of the rubber component containing the isoprene-based rubber and the specific modified conjugated diene-based polymer, sites that can react with the below-described filler can be formed in the rubber component, so that the dispersibility of the filler can be improved and the balance between the flexibility and strength of the rubber component can be enhanced. Hence, excellent on-ice performance and steering stability can be achieved when the rubber composition is used in tires.

Herein, the isoprene-based rubber is a rubber having an isoprene skeleton. Examples thereof include natural rubber and synthetic isoprene rubber. These isoprene-based rubbers may be contained singly or as a blend of two or more.

As a result of the rubber component containing the isoprene-based rubber, the on-ice performance and steering stability of the rubber composition can be enhanced.

The isoprene-based rubber is an unmodified isoprene-based rubber to distinguish it from the below-described modified conjugated diene-based polymer.

The content ratio of the isoprene-based rubber in the rubber component is not limited, but is preferably 10 mass% or more, more preferably 20 mass% or more, and further preferably 30 mass% or more, and preferably 80 mass% or less, more preferably 70 mass% or less, and further preferably 60 mass% or less, from the viewpoint of improving the balance between on-ice performance and steering stability when the rubber composition is used in tires.

The rubber component contains the modified conjugated diene-based polymer that is a reaction product of a conjugated diene-based polymer having an active terminal and a compound [M] containing a total of two or more of at least one selected from a group "-CR¹=N-A¹" and a group "-N=CR¹-A¹", where R¹ is a hydrogen atom or a hydrocarbyl group, and A¹ is a monovalent group having an alkoxysilyl group.

Since the modified conjugated diene-based polymer has many sites that can react with the below-described filler, the dispersibility of the filler can be improved. Moreover, since the modified conjugated diene-based polymer has well-balanced flexibility and strength, excellent on-ice performance and steering stability can be achieved when the rubber composition is used in tires.

The conjugated diene-based polymer forming the modified conjugated diene-based polymer is obtained by polymerizing a monomer containing a conjugated diene-based compound.

Examples of the conjugated diene-based compound used in the polymerization include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Of these compounds, at least one selected from 1,3-butadiene, isoprene, and 2,3-dimethyl-1,3-butadiene is preferably used.

The vinyl bond content of the conjugated diene-based polymer is preferably 10 mass% to 60 mass% and more preferably 20 mass% to 60 mass%, from the viewpoint of excellent balance between on-ice performance and steering stability when the rubber composition is used in tires.

The conjugated diene-based polymer may be a homopolymer of the conjugated diene compound, or a copolymer of the conjugated diene compound.

The conjugated diene-based polymer forming the modified conjugated diene-based polymer is preferably a copolymer containing an aromatic vinyl unit and a conjugated diene-based unit, from the viewpoint of enhancing the strength of the rubber component.

Examples of aromatic vinyl compounds used in the polymerization include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine, diphenylethylene, and tertiary amino group-containing diphenylethylene (e.g. 1-(4-N,N-dimethylaminophenyl)-1-phenylethylene, etc.). Of these, styrene and α-methylstyrene are preferably used as aromatic vinyl compounds.

In the case where the conjugated diene-based polymer is a copolymer of a conjugated diene compound and an aromatic vinyl compound, a copolymer containing 1,3-butadiene and styrene as monomer units is preferable from the viewpoint of high livingness in anionic polymerization. The copolymer preferably has a random copolymerization portion in which the distribution of the conjugated diene compound and the aromatic vinyl compound is irregular, and may further have a block portion composed of the conjugated diene compound or the aromatic vinyl compound.

In the case where the conjugated diene-based polymer is a copolymer of a conjugated diene compound and an aromatic vinyl compound, the proportion of the aromatic vinyl unit in the conjugated diene-based polymer is preferably 10 mass% or less and more preferably 7 mass% or less.

If the proportion of the aromatic vinyl unit is more than 10 mass%, it may be impossible to achieve sufficient on-ice and on-sow performance when the rubber composition is used in tires.

In the polymerization, one or more compounds (hereafter also referred to as "other monomers") other than the conjugated diene compound and the aromatic vinyl compound may be used as monomers. Examples of the other monomers include acrylonitrile, methyl (meth)acrylate, and ethyl (meth)acrylate. The proportion of the other monomers used is preferably 10 mass% or less and more preferably 5 mass% or less with respect to the total amount of the monomers used for the polymerization.

The polymerization method for obtaining the conjugated diene-based polymer is not limited. For example, solution polymerization, gas phase polymerization, bulk polymerization, etc. may be used. Solution polymerization is preferable.

As the polymerization mode, any of batch mode and continuous mode may be used. In the case of using solution polymerization, a specific example of the polymerization method involves polymerizing a monomer containing a conjugated diene compound in an organic solvent in the presence of a polymerization initiator and optionally a randomizer.

As the polymerization initiator used in the polymerization, at least one of an alkali metal compound and an alkaline earth metal compound may be used. Specific example thereof include alkyllithium such as methyllithium, ethyllithium, n-propyllithium, n-butyllithium, sec-butyllithium and t-butyllithium, 1,4-dilithiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthyl sodium, naphthyl potassium, di-n-butylmagnesium, di-n-hexylmagnesium, ethoxypotassium, and calcium stearate. Of these, lithium compounds are preferable.

The total amount of the polymerization initiator used is preferably 0.2 mmol to 20 mmol with respect to 100 g of the monomers used for the polymerization.

The polymerization reaction may be performed using, as an initiator, a mixture of at least one of an alkali metal compound and an alkaline earth metal compound and a compound having a functional group that interacts with silica. As a result of the polymerization being performed in the presence of such a mixture, the polymerization initiation terminal of the conjugated diene-based polymer can be modified with the functional group that interacts with silica.

In this specification, the term "functional group that interacts with silica" means a group having an element that interacts with silica, such as nitrogen, sulfur, phosphorus, and oxygen. The term "interaction" means forming a covalent bond between molecules or forming an intermolecular force (e.g. an intermolecular electromagnetic force such as ion-dipole interaction, dipole-dipole interaction, hydrogen bond, or van der Waals force) weaker than a covalent bond.

As the compound having a functional group that interacts with silica, which is used to modify the polymerization initiation terminal, a nitrogen-containing compound such as a secondary amine compound is preferable. Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tertbutyldimethylsilyl)piperazine, and 1,3-ditrimethylsilyl-1,3,5-triazinane.

In the case of performing the polymerization in the presence of the mixture, the at least one of an alkali metal compound and an alkaline earth metal compound and the compound having a functional group that interacts with silica may be mixed in advance and the mixture may be added to the polymerization system to perform the polymerization. Alternatively, the at least one of an alkali metal compound and an alkaline earth metal compound and the compound having a functional group that interacts with silica may be added to the polymerization system and mixed in the polymerization system to perform the polymerization. Both of these cases are included in a mode of "polymerizing a monomer containing a conjugated diene compound in the presence of an initiator containing at least one of an alkali metal compound and an alkaline earth metal compound".

The randomizer used in the polymerization can be used for the purpose of, for example, adjusting the vinyl bond content, which indicates the content of vinyl bonds in the polymer. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. These randomizers may be used singly or in combination of two or more.

The organic solvent used in the polymerization is any organic solvent that is inert to the reaction, such as aliphatic hydrocarbons, alicyclic hydrocarbons, and aromatic hydrocarbons. In particular, hydrocarbons having a carbon number of 3 to 8 are preferable. Specific examples thereof include propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene, and cyclohexene. These organic solvents may be used singly or in combination of two or more.

In the case of solution polymerization, the monomer concentration in the reaction solvent is preferably 5 mass% to 50 mass% and more preferably 10 mass% to 30 mass%, from the viewpoint of maintaining the balance between productivity and ease of polymerization control. The temperature of the polymerization reaction is preferably -20 °C to 150 °C and more preferably 0 °C to 120 °C. The polymerization reaction is preferably performed under sufficient pressure to keep the monomers substantially in liquid phase. Such pressure can be obtained by a method such as pressurizing the inside of the reactor with a gas inert to the polymerization reaction.

The polystyrene-equivalent weight-average molecular weight (Mw) of the obtained conjugated diene-based polymer measured by gel permeation chromatography (GPC) is preferably 5.0 × 10⁴ to 2.0 × 10⁶. If Mw is less than 5.0 × 10⁴, the tensile strength, low heat generating property, and wear resistance of the crosslinked polymer tend to decrease. If Mw is more than 2.0 × 10⁶, the processability of the rubber composition obtained using the modified polymer tends to decrease. Mw is more preferably 1.0 × 10⁵ to 1.0 × 10⁶.

The modified conjugated diene-based polymer is obtained by reacting the foregoing conjugated diene-based polymer with a compound [M] containing a total of two or more of at least one group (hereafter also referred to as "specific imino group") out of a group "-CR¹=N-A¹" and a group "-N=CR¹-A^{1"} (where R¹ is a hydrogen atom or a hydrocarbyl group, and A¹ is a monovalent group having an alkoxysilyl group).

By using a compound containing a total of two or more specific imino groups as a modifier, it is possible to obtain a modified conjugated diene-based polymer modified with a group that interacts with a filler such as silica and having many branches of polymer chains by the modification process.

In the specific imino group, examples of the hydrocarbyl group of R¹ include alkyl group having a carbon number of 1 to 20, a cycloalkyl group having a carbon number of 3 to 20, an alkenyl group having a carbon number of 2 to 20, and an aryl group having a carbon number of 6 to 20. The remaining structure of A¹ is not limited as long as it has an alkoxysilyl group, but A¹ is preferably a group further having a methylene group or a polymethylene group, and more preferably a group having a methylene group or a polymethylene group and an alkoxysilyl group and, with the methylene group or polymethylene group, bonded to a nitrogen atom or carbon atom that forms a carbon-nitrogen double bond. The number of specific imino groups contained in the compound [M] is 2 or more, and preferably 2 to 6. A plurality of R¹ and A¹ in the compound [M] may be the same or different.

In particular, the compound [M] is preferably a compound represented by the following formula (1): 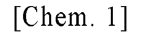 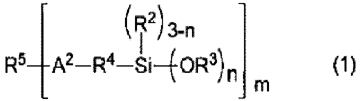 where R² and R³ are each independently a hydrocarbyl group having a carbon number of 1 to 20, R⁴ is an alkanediyl group having a carbon number of 1 to 20, A² is a group "*-C(R¹)=N-" or a group "*-N=C(R¹)-" (where R¹ is a hydrogen atom or a hydrocarbyl group, and "*" indicates an atomic bond that binds to R⁵), R⁵ is an m-valent hydrocarbyl group having a carbon number of 1 to 20 or an m-valent group having a carbon number of 1 to 20 and containing at least one atom selected from the group consisting of a nitrogen atom, an oxygen atom, and a sulfur atom and not containing an active hydrogen, n is an integer of 1 to 3, m is an integer of 2 to 10, and a plurality of R², R³, R⁴, A², and n may be the same or different.

In formula (1), examples of the hydrocarbyl group of each of R² and R³ include an alkyl group having a carbon number of 1 to 20, an allyl group, a cycloalkyl group having a carbon number of 3 to 20, and an aryl group having a carbon number of 6 to 20. Examples of the hydrocarbylene group of R⁴ include an alkanediyl group having a carbon number of 1 to 20, a cycloalkylene group having a carbon number of 3 to 20, and an arylene group having a carbon number of 6 to 20. R⁴ is preferably linear.

The above explanation applies to R¹ contained in A², n is preferably 2 or 3 and more preferably 3, from the viewpoint of more effectively improving the silica dispersibility.

Examples of the m-valent hydrocarbyl group of R⁵ include groups obtained by removing m hydrogen atoms from a chain hydrocarbon having a carbon number of 1 to 20, an alicyclic hydrocarbon having a carbon number of 3 to 20, and an aromatic hydrocarbon having a carbon number of 6 to 20. A group (aromatic ring group) obtained by removing m hydrogen atoms from a ring portion of an aromatic hydrocarbon is preferable from the viewpoint of more effectively improving the wear resistance of the resulting vulcanized rubber. Specific examples of the aromatic hydrocarbon include a ring structure represented by the following formula (2) and a polycyclic structure (e.g. a biphenyl group) in which two or more ring structures each represented by the following formula (2) are connected. 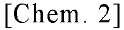 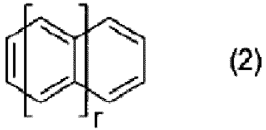 where r is an integer of 0 to 5.

Preferable specific examples in the case where R⁵ is an m-valent group having a carbon number of 1 to 20 and containing at least one atom selected from the group consisting of a nitrogen atom, an oxygen atom, and a sulfur atom and not containing an active hydrogen include an m-valent heterocyclic group and an m-valent group having a tertiary amine structure. The heterocyclic group is preferably a conjugated system. For example, the heterocyclic group is a group obtained by removing m hydrogen atoms from a monocyclic ring or condensed ring of pyridine, pyrimidine, pyrazine, quinoline, naphthalidine, furan, thiophene, etc. or a ring portion of a structure formed by connecting a plurality of such monocyclic rings or condensed rings.
m is an integer of 2 to 10. m is preferably 2 to 6, from the viewpoint of the processability of the rubber composition. In this specification, the term "active hydrogen" means a hydrogen atom bonded to an atom other than a carbon atom, preferably having lower bond energy than the carbon-hydrogen bond of polymethylene.

Specific examples of the compound [M] include compounds represented by the following formulas (M-1) to (M-23). These compounds [M] may be used singly or in combination of two or more. R⁷ in formula (M-11) represents a hydrogen atom or an alkyl group.

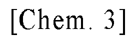

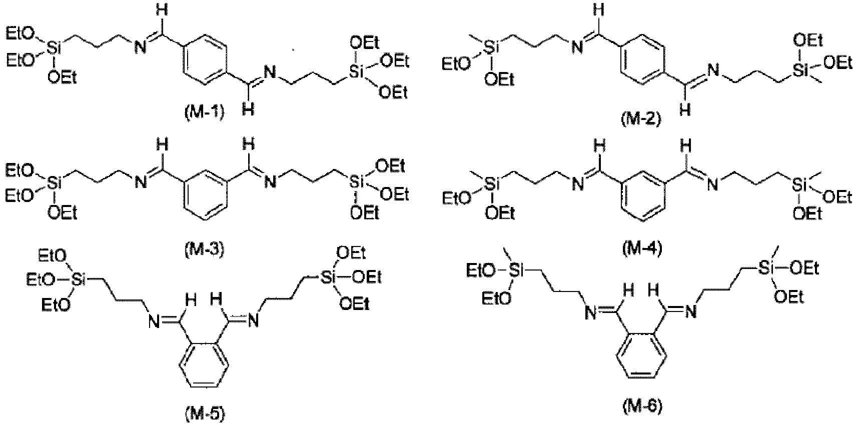

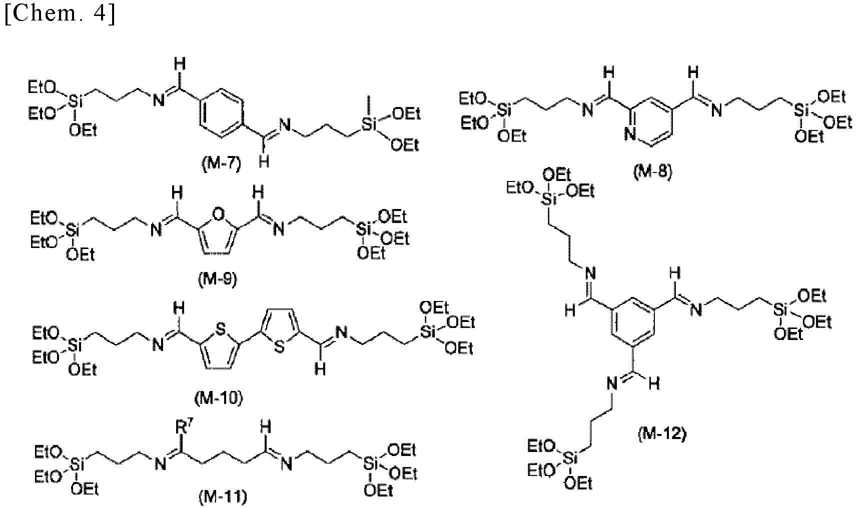

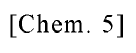

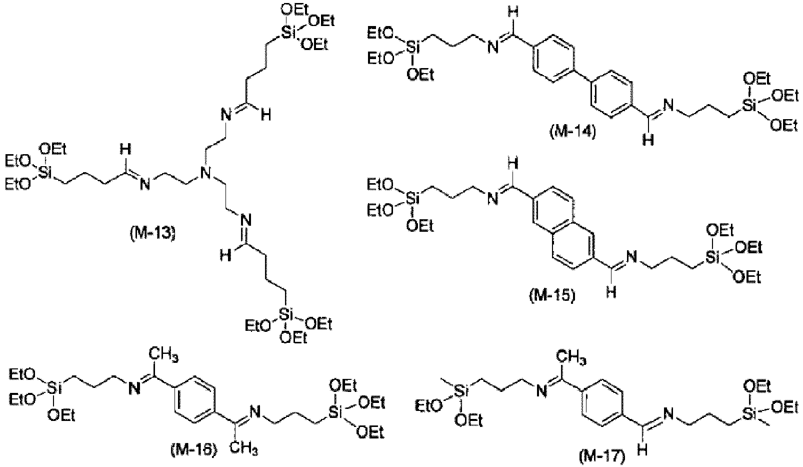

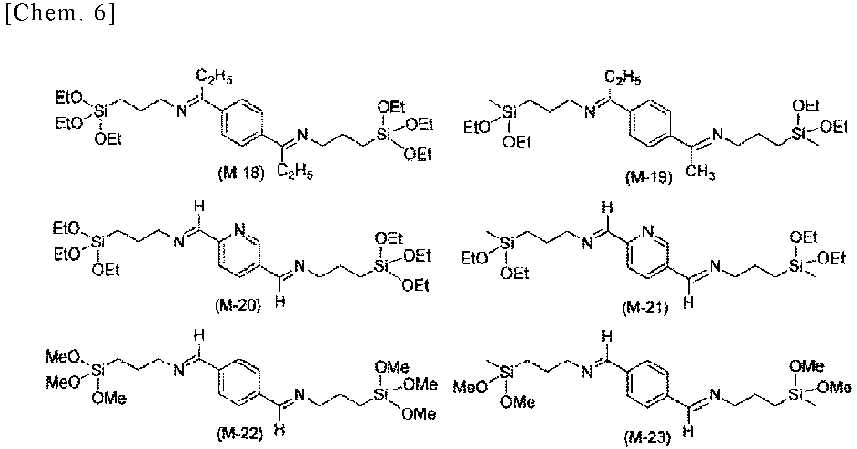

The compound [M] can be synthesized by appropriately combining standard methods of organic chemistry. For example, methods of obtaining the compound represented by formula (1) include: (i) a method of dehydration condensation of a monofunctional amine compound containing an alkoxysilyl group and R⁴ (e.g. 3-aminopropyltriethoxysilane, 3-aminopropylmethyldiethoxysilane, etc.) and a polyfunctional aldehyde compound containing R⁵ (e.g. terephthalaldehyde, isophthalaldehyde, phthaldialdehyde, 2,4-pyridinedicarboxaldehyde, etc.); and (ii) a method of dehydration condensation of a polyfunctional amine compound containing R⁵ (e.g. tris(2-aminoethyl)amine, N,N'-bis(2-aminoethyl)methylamine, etc.) and a monofunctional hydroxyl group-containing compound containing an alkoxysilyl group and R⁴ (e.g. 4-(triethoxysilyl)butanal, etc.). These synthetic reactions are preferably performed in a suitable organic solvent, optionally in the presence of an appropriate catalyst. The synthetic method for the compound [M] is not limited to the above.

The reaction between the conjugated diene-based polymer having an active terminal and the compound [M] can be performed, for example, as a solution reaction. The proportion of the compound [M] used (the total amount in the case where two or more compounds [M] are used) is preferably 0.01 mol or more and more preferably 0.05 mol or more with respect to 1 mol of the metal atom in the polymerization initiator involved in the polymerization, from the viewpoint of sufficiently advancing the modification reaction. Regarding the upper limit, the proportion of the compound [M] used is preferably less than 2.0 mol and more preferably less than 1.5 mol with respect to 1 mol of the metal atom in the polymerization initiator involved in the polymerization, in order to avoid excessive addition.

The temperature of the modification reaction is typically the same as that of the polymerization reaction, and is preferably -20 °C to 150 °C and more preferably 0 °C to 120 °C. If the reaction temperature is low, the viscosity of the polymer after the modification tends to increase. If the reaction temperature is high, the polymerization active terminal tends to be deactivated. The reaction time is preferably 1 minute to 5 hours and more preferably 2 minutes to 1 hour.

In the reaction between the conjugated diene-based polymer having an active terminal and the compound [M], one or more other modifiers or coupling agents may be used together with the compound [M]. The other modifiers or coupling agents are not limited as long as they are compounds capable of reacting with the active terminal of the conjugated diene-based polymer obtained by the polymerization, and compounds known as modifiers or coupling agents for conjugated diene-based polymers may be used. In the case where the other modifiers or coupling agents are used, the proportion of the other modifiers or coupling agents used is preferably 10 mol% or less and more preferably 5 mol% or less.

The modified conjugated diene-based polymer contained in the reaction solution can be isolated by, for example, a known desolvation method such as steam stripping and drying operation such as heat treatment. The polystyrene-equivalent weight-average molecular weight of the modified conjugated diene-based polymer measured by GPC is preferably 1.0 × 10⁵ to 4.0 × 10⁶, from the viewpoint of obtaining a modified conjugated diene-based polymer having sufficiently high Mooney viscosity and good shape stability and obtaining a rubber composition having excellent processability. The polystyrene-equivalent weight-average molecular weight is more preferably 1.8 × 10⁵ to 3.0 × 10⁶, and further preferably 2.0 × 10⁵ to 2.0 × 10⁶. The weight-average molecular weight of the modified conjugated diene-based polymer is a value obtained from the maximum peak molecular weight of the GPC curve measured by GPC after the reaction between the conjugated diene-based polymer having an active terminal and the compound [M].

The obtained modified conjugated diene-based polymer preferably has a peak top molecular weight of less than 1.0 × 10⁶ at the peak with the lowest molecular weight measured by GPC. This can further improve the on-ice performance when the rubber composition is used in tires.

The obtained modified conjugated diene-based polymer has a branch structure in which modified or unmodified conjugated diene-based polymer chains are bonded to a plurality of reaction points (carbon-nitrogen double bonds (C=N groups), alkoxysilyl groups) in the compound [M].

The number of branches of the polymer chains per molecule of the modified conjugated diene-based polymer is preferably 3 or more and more preferably in the range of 3 to 20, from the viewpoint of sufficiently high Mooney viscosity and good cold flow of the obtained modified conjugated diene-based polymer. It is believed that, since the C=N group is more reactive than the alkoxysilyl group and preferentially reacts with the active terminal of the conjugated diene-based polymer, the number of residual alkoxysilyl groups increases and the interaction between the modified conjugated diene-based polymer and silica is improved, with it being possible to achieve excellent low heat generating property.

The modified conjugated diene-based polymer is preferably represented by the following formula (3): 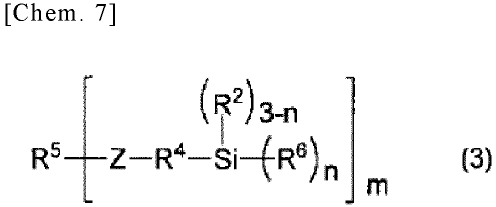 where R² is a hydrocarbyl group having a carbon number of 1 to 20, R⁶ is a hydrocarbyloxy group having a carbon number of 1 to 20 or a modified or unmodified conjugated diene-based polymer chain, R⁴ is an alkanediyl group having a carbon number of 1 to 20, Z is a group represented by the following formula (4) or formula (5), R⁵ is an m-valent hydrocarbyl group having a carbon number of 1 to 20 or an m-valent group having a carbon number of 1 to 20 and containing at least one atom selected from the group consisting of a nitrogen atom, an oxygen atom, and a sulfur atom and not containing an active hydrogen, n is an integer of 1 to 3, m is an integer of 2 to 10, and a plurality of R², R⁴, R⁶, Z, and n may be the same or different. 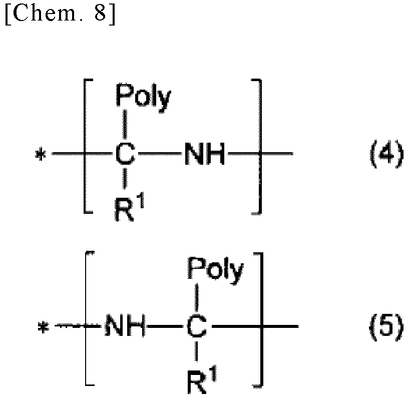 where R¹ is a hydrogen atom or a hydrocarbyl group, Poly is a modified or unmodified conjugated diene-based polymer chain, and "*" indicates an atomic bond that binds to R⁵.

In formulas (3), (4) and (5), R¹, R², R⁴, and R⁵ are as described with regard to formula (1). The hydrocarbyloxy group of R⁶ is preferably an ethoxy group or a methoxy group. The conjugated diene-based polymer chain of R⁶ and the conjugated diene-based polymer chain Poly in formulas (4) and (5) have structures corresponding to the conjugated diene-based polymer having an active terminal obtained in the foregoing polymerization process. These conjugated diene-based polymer chains may have functional groups that interact with silica at their ends.

The content ratio of the modified conjugated diene-based polymer in the rubber component is not limited, but is preferably 20 mass% or more, more preferably 30 mass% or more, and further preferably 40 mass% or more, from the viewpoint of improving the balance between on-ice performance and steering stability when the rubber composition is used in tires. From the same viewpoint, the content ratio of the modified conjugated diene-based polymer in the rubber component is preferably 90 mass% or less, more preferably 80 mass% or less, and further preferably 70 mass% or less.

### (Filler)

The rubber composition according to the present disclosure further contains a filler containing at least silica, in addition to the rubber component.

As a result of the rubber composition containing a certain amount of silica, the steering stability and on-ice performance when the rubber composition is used in tires can be enhanced while maintaining good low heat generating property and the like.

The type of silica is not limited, and examples thereof include wet silica (hydrous silicate), dry silica (anhydrous silicate), calcium silicate, and aluminum silicate. Of these, wet silica is preferable. These silicas may be used singly or in combination of two or more.

Precipitated silica may be used as the wet silica. The term "precipitated silica" herein refers to silica that is obtained by, during the early part of the production process, allowing a reaction solution to react in a relatively high temperature and in a neutral to alkaline pH range to grow silica primary particles, and then controlling the solution to an acidic side so as to cause agglomeration of the primary particles.

The conditions for the silica are not limited. For example, the CTAB specific surface area (specific surface area by cetyltrimethylammonium bromide adsorption) may be 70 m²/g or more and 250 m²/g or less. The CTAB specific surface area is a value measured in accordance with ASTM D3765-92. Here, on the assumption that the cross-sectional area per one cetyltrimethylammonium bromide molecule adsorbed on the silica surface is 0.35 nm², the specific surface area (m²/g) calculated from the amount of CTAB adsorption is taken to be the CTAB specific surface area.

The BET specific surface area of the silica may be 100 m²/g or more and 250 m²/g or less. The BET specific surface area is a specific surface area determined by the BET method, and can be measured in accordance with ASTM D4820-93 in the present disclosure.

The content of the silica is not limited, and may be appropriately set according to the required performance. For example, the content of the silica is preferably 10 to 160 parts by mass and more preferably 30 to 120 parts by mass with respect to 100 parts by mass of the rubber component.

If the content of the silica is 10 parts by mass or more with respect to 100 parts by mass of the rubber component, the on-ice performance and steering stability when the rubber composition is used in tires can be improved more reliably. If the content of the silica is 160 parts by mass or less, deterioration in the processability of the rubber composition and deterioration in rolling resistance after the rubber composition is used in tires can be suppressed more reliably.

As the filler, carbon black may be further contained in addition to the silica. The inclusion of carbon black can further improve the wear resistance of the tire.

The carbon black is not limited, and examples thereof include GPF, FEF, HAF, ISAF, and SAF grade carbon blacks. Of these, ISAF and SAF grade carbon blacks are preferable from the viewpoint of improving the wear resistance of the rubber composition. These carbon black may be used singly or in combination of two or more.

The content of the carbon black in the rubber composition is preferably 0.5 parts by mass or more, more preferably 1 part by mass or more, and further preferably 2 parts by mass or more with respect to 100 parts by mass of the rubber component. The content of the carbon black in the rubber composition is preferably 15 parts by mass or less and more preferably 12 parts by mass or less with respect to 100 parts by mass of the rubber component, from the viewpoint of improving the low loss property of the tire.

The proportion of the content of the carbon black to the content of the silica (carbon black content/silica content) is preferably 0.05 to 1.2, more preferably 0.07 to 1.0, and particularly preferably 0.08 to 0.7, from the viewpoint of further enhancing the on-ice performance and steering stability while suppressing deterioration in rolling resistance when the rubber composition is used in tires. As a result of the proportion of the content of the carbon black being 0.05 or more, the strength of the rubber can be enhanced and the steering stability when the rubber composition is used in tires can be further improved. As a result of the proportion of the content of the carbon black being 1.2 or less, deterioration in low heat generating property due to high carbon black content can be suppressed and good rolling resistance when the rubber composition is used in tires can be maintained.

Besides the foregoing silica and carbon black, an inorganic compound represented by the following general formula (XX) may also be used as the filler:

nM·xSiO_{y}·zH₂O ... (XX)

where M represents a metal selected from the group consisting of aluminum, magnesium, titanium, calcium, and zirconium, oxides and hydroxides of these metals, hydrates thereof, and carbonate salts of these metals, and n, x, y, and z respectively represent an integer of 1 to 5, an integer of 0 to 10, an integer of 2 to 5, and an integer of 0 to 10.

Examples of the inorganic compound include crystalline aluminosilicate salts and the like containing hydrogen, an alkali metal, or an alkaline earth metal, which compensates the charge, for example, alumina (Al₂O₃) such as γ-alumina and α-alumina, alumina hydrate (Al₂O₃·H₂O) such as boemite and diaspore, aluminum hydroxide [Al(OH)₃] such as gibbsite and bayerite, aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO-8SiO₂-9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (A1₂O₃·4SiO₂-2H₂O), aluminum silicate (Al₂SiO₅, Al₄·3SiO₄·5H₂O, etc.), magnesium silicate (Mg₂SiO₄, MgSiO₃, etc.), calcium silicate (Ca₂SiO₄, etc.), aluminum calcium silicate (Al₂O₃·CaO·2SiO₂, etc.), magnesium calcium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and various kinds of zeolite.

### (Thermoplastic resin)

The rubber composition according to the present disclosure contains a specific amount of thermoplastic resin in addition to the foregoing rubber component and filler.

As a result of the rubber composition containing the specific amount of thermoplastic resin, the on-ice performance when the rubber composition is used in tires can be enhanced.

The content of the thermoplastic resin needs to be 5 parts by mass or more and is preferably 7 parts by mass or more with respect to 100 parts by mass of the rubber component. If the content of the thermoplastic resin is 5 parts by mass or more with respect to 100 parts by mass of the rubber component, the on-ice performance can be further improved. The content of the thermoplastic resin is preferably 70 parts by mass or less and more preferably 50 parts by mass or less with respect to 100 parts by mass of the rubber component, from the viewpoint of suppressing deterioration in steering stability due to a decrease in the elastic modulus of the rubber composition.

Examples of the thermoplastic resin include a C₅-based resin, a C₅-C₉-based resin, a C₉-based resin, a dicyclopentadiene resin, a terpene phenol resin, a terpene resin, a rosin resin, and an alkylphenol resin. Of these, at least one selected from the group consisting of a C₅-based resin, a C₅-C₉-based resin, a C₉-based resin, a dicyclopentadiene resin, a terpene phenol resin, a terpene resin, a rosin resin, and an alkylphenol resin is preferable. In the case where at least one of a C₅-based resin, a C₅-C₉-based resin, a C₉-based resin, a dicyclopentadiene resin, a terpene phenol resin, a terpene resin, a rosin resin, and an alkylphenol resin is contained as the thermoplastic resin, the on-ice performance of the tire can be further improved. These thermoplastic resins may be used singly or in combination of two or more.

The C₅-based resin refers to a C₅-based synthetic petroleum resin. Examples of the C₅-based resin include aliphatic petroleum resins obtained by polymerizing, using a Friedel-Crafts catalyst such as AlCl₃ or BF₃, a C₅ fraction obtained by pyrolysis of naphtha in the petrochemical industry. The C₅ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. Commercial products may be used as the C₅-based resin, such as "ESCOREZ^{®} 1000 series" which are aliphatic petroleum resins produced by ExxonMobil Chemical Company (ESCOREZ is a registered trademark in Japan, other countries, or both), "A100, B 170, M100, R100" in the "Quintone^{®} 100 series" which are aliphatic petroleum resins produced by Zeon Corporation (Quintone is a registered trademark in Japan, other countries, or both), and "T-REZ RA100" produced by Tonen Chemical Corporation.

The C₅-C₉-based resin refers to a C₅-C₉-based synthetic petroleum resin. Examples of the C₅-C₉-based resin include solid polymers obtained by polymerizing a petroleum-derived C₅ fraction and C₉ fraction using a Friedel-Crafts catalyst such as AlCl₃ or BF₃. Specific examples include copolymers having, as main components, styrene, vinyltoluene, α-methylstyrene, indene, and the like. As the C₅-C₉-based resin, a resin with little C₉ or higher component is preferable from the viewpoint of compatibility with the rubber component. Here, including "little C₉ or higher component" means that the amount of C₉ or higher component in the total amount of the resin is less than 50 mass%, and preferably 40 mass% or less. Commercial products may be used as the C₅-C₉-based resin, such as "Quintone^{®} G100B" (produced by Zeon Corporation), "ECR213" (produced by ExxonMobil Chemical Company), and "T-REZ RD104" (produced by Tonen Chemical Corporation).

The C₉-based resin is, for example, a resin resulting from polymerization of an aromatic group with a carbon number of 9 that has, as principal monomers, vinyl toluene, alkyl styrene, and indene, which are C₉ fraction by-products produced along with petrochemical raw materials, such as ethylene or propylene, by pyrolysis of naphtha in the petrochemical industry. Specific examples of C₉ fractions obtained by pyrolysis of naphtha include vinyltoluene, α-methylstyrene, β-methylstyrene, γ-methylstyrene, o-methylstyrene, p-methylstyrene, and indene. Along with a C₉ fraction, the C₉-based resin may use a C₈ fraction, such as styrene, a C₁₀ fraction, such as methylindene or 1,3-dimethylstyrene, and other substances such as naphthalene, vinylnaphthalene, vinyl anthracene, or p-tert-butylstyrene as raw materials. These C₈-C₁₀ fractions and the like may simply be mixed or may be copolymerized using a Friedel-Crafts catalyst, for example, to obtain the C₉-based resin. The C₉-based resin may be a modified petroleum resin modified by a compound including a hydroxyl group, an unsaturated carboxylic acid compound, or the like. Commercial products may be used as the C₉-based resin. Examples of an unmodified C₉-based petroleum resin include "Nisseki Neopolymer^{®} L-90", "Nisseki Neopolymer^{®} 120", "Nisseki Neopolymer^{®} 130", and "Nisseki Neopolymer^{®} 140" (produced by JX Nippon Oil & Energy Corporation) (Neopolymer is a registered trademark in Japan, other countries, or both).

The dicyclopentadiene resin is a petroleum resin produced using dicyclopentadiene, which is obtainable by dimerization of cyclopentadiene, as a main raw material. Commercial products may be used as the dicyclopentadiene resin. Examples include "1105, 1325, 1340" in the "Quintone^{®} 1000 series", which are alicyclic petroleum resins produced by Zeon Corporation.

The terpene phenol resin can be obtained, for example, using a method by which terpenes and various phenols are reacted by using a Friedel-Crafts catalyst, or further condensed with formalin. The terpenes of the raw material are not limited, but are preferably monoterpene hydrocarbons such as α-pinene and limonene, more preferably terpenes containing α-pinene, and particularly preferably α-pinene. Commercial products may be used as the terpene phenol resin. Examples include "Tamanol 803L" and "Tamanol 901" (produced by Arakawa Chemical Industries, Ltd.), and "YS Polyster^{®} U" series, "YS Polyster^{®} T" series, "YS Polyster^{®} S" series, "YS Polyster^{®} G" series, "YS Polyster^{®} N" series, "YS Polyster^{®} K" series, and "YS Polyster^{®} TH" series (produced by Yasuhara Chemical Co., Ltd.) (Polyster is a registered trademark in Japan, other countries, or both).

The terpene resin is a solid resin obtained by polymerization, using a Friedel-Crafts catalyst, of turpentine oil obtained simultaneously when obtaining rosin from Pinus trees or a polymerization component separated from the turpentine oil. Examples include β-pinene resin and α-pinene resin. Commercial products may be used as the terpene resin. Examples include "YS Resin" series (PX-1250, TR-105, etc.) produced by Yasuhara Chemical Co., Ltd., and "Piccolyte" series (A115, S115, etc.) produced by Hercules Inc.

The rosin resin is obtained as a residue after distilling turpentine essential oil from collected balsams such as pine resin (pine tar) which is the sap from Pinaceae plants. The rosin resin is a natural resin having a rosin acid (abietic acid, palustric acid, isopimaric acid, etc.) as a main component, or a modified resin or hydrogenated resin produced by subjecting the natural resin to modification or hydrogenation. Examples include a natural resin rosin, and a polymerized rosin or partially hydrogenated rosin thereof; a glycerin ester rosin, and a partially hydrogenated rosin, completely hydrogenated rosin, or polymerized rosin thereof; and a pentaerythritol ester rosin, and a partially hydrogenated rosin or polymerized rosin thereof. The natural resin rosin may, for example, be gum rosin, tall oil rosin, or wood rosin contained in crude turpentine or tall oil. Commercial products may be used as the rosin resin. Examples include "NEOTALL 105" (produced by Harima Chemicals Group, Inc.), "SN-TACK 754" (produced by San Nopco Limited), "Lime Resin No. 1", "PENSEL A", and "PENSEL AD" (produced by Arakawa Chemical Industries, Ltd.), "Poly-Pale" and "Pentalyn C" (produced by Eastman Chemical Company), and "Highrosin^{®} S" (produced by Taishamatsu essential oil Co., Ltd.) (Highrosin is a registered trademark in Japan, other countries, or both).

The alkylphenol resin is, for example, obtained through a condensation reaction of alkylphenol and formaldehyde in the presence of a catalyst. Commercial products may be used as the alkylphenol resin. Examples include "Hitanol 1502P" (alkylphenol-formaldehyde resin, produced by Hitachi Chemical Co., Ltd.), "TACKIROL 201" (alkylphenol-formaldehyde resin, produced by Taoka Chemical Co., Ltd.), "TACKIROL 250-I" (brominated alkylphenol-formaldehyde resin, produced by Taoka Chemical Co., Ltd.), "TACKIROL 250-III" (brominated alkylphenol-formaldehyde resin, produced by Taoka Chemical Co., Ltd.), "R7521P", "SP1068", "R7510PJ", "R7572P", and "R7578P" (produced by SI Group, Inc.).

### (Other components)

The rubber composition according to the present disclosure may contain other components in addition to the foregoing components as appropriate according to the purpose or need as long as the effects according to the present disclosure are not lost. Examples of the other components include additives commonly used in the rubber industry, such as age resistors, crosslinking accelerators, crosslinking agents, crosslinking acceleration aids, silane coupling agents, softeners, stearic acid, antiozonants, and surfactants.

The age resistors are not limited, and may be known age resistors. Examples include phenolic age resistors, imidazole-based age resistors, and amine-based age resistors. One of these age resistors may be used singly, or two or more of these age resistors may be used together.

The crosslinking accelerators are not limited, and may be known crosslinking accelerators. Examples include thiazole vulcanization accelerators such as 2-mercaptobenzothiazole and dibenzothiazyl disulfide; sulfenamide vulcanization accelerators such as N-cyclohexyl-2-benzothiazyl sulfonamide and N-t-butyl-2-benzothiazyl sulfenamide; guanidine vulcanization accelerators such as diphenylguanidine; thiuram vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate vulcanization accelerators such as zinc dimethyldithiocarbamate; and zinc dialkyldihio phosphate.

The crosslinking agents are not limited. Examples include sulfur.

The crosslinking accelerators are not limited, and may be known crosslinking accelerators. Examples include thiazole vulcanization accelerators such as 2-mercaptobenzothiazole and dibenzothiazyl disulfide; sulfenamide vulcanization accelerators such as N-cyclohexyl-2-benzothiazyl sulfonamide and N-t-butyl-2-benzothiazyl sulfenamide; guanidine vulcanization accelerators such as diphenylguanidine; thiuram vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate vulcanization accelerators such as zinc dimethyldithiocarbamate; and zinc dialkyldihio phosphate.

Examples of the crosslinking acceleration aids include zinc oxide (ZnO) and fatty acids. The fatty acids may be any of saturated and unsaturated fatty acids, and may be any of straight-chain and branched fatty acids. The carbon number of the fatty acid is not limited. For example, fatty acids having a carbon number of 1 to 30, preferably a carbon number of 15 to 30, may be used. More specific examples include naphthenic acids such as cyclohexanoic acid (cyclohexanecarboxylic acid), and alkylcyclopentane having a side chain; saturated fatty acids such as hexanoic acid, octanoic acid, decanoic acid (inclusive of branched carboxylic acids such as neodecanoic acid), dodecanoic acid, tetradecanoic acid, hexadecanoic acid, and octadecanoic acid (stearic acid); unsaturated fatty acids such as methacrylic acid, oleic acid, linolic acid, and linoleic acid; and resin acids such as rosin, tall oil acid, and abietic acid. One of these fatty acids may be used singly, or two or more of these fatty acids may be used together. In the present disclosure, zinc oxide and stearic acid are preferably used.

Examples of the silane coupling agents include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxy silylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxy silylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethyl silyl propyl-N,N-dimethylthiocarbamoyl tetrasulfide, dimethoxymethylsilylpropylbenzothiazolyl tetrasulfide, 3-octanoylthiopropyltriethoxysilane, 3-mercaptopropyltrimethoxysilane, 3-mercaptopropyltriethoxysilane, vinyltriethoxysilane, vinyltrimethoxysilane, 3-aminopropyltriethoxysilane, 3-aminopropyltrimethoxysilane, 3-mercaptopropylmethyldimethoxysilane, γ-glycidoxypropyltrimethoxysilane, γ-glycidoxypropylmethyldiethoxysilane, and 3-[ethoxybis(3,6,9,12,15-pentaoxaoctacosane-1-yloxy)silyl]-1-propanethiol ("Si363" produced by Evonik Japan Co., Ltd.). These silane coupling agents may be used singly or in combination of two or more.

Examples of the softeners include naphthenic base oil, paraffinic base oil, and aromatic base oil. The content of the softener is preferably 2 parts by mass to 30 parts by mass with respect to 100 parts by mass of the rubber component. When the content of the softener is more than 30 parts by mass with respect to 100 parts by mass of the rubber component, the softener may exude to the surface of a rubber product, or the wear resistance may deteriorate. Moreover, the softener may interact with the tetrazine sites in the modified rubber component and shield them, causing a decrease in reactivity and deterioration in low loss property and wear resistance.

Of the foregoing softeners, it is preferable to use naphthenic base oil or paraffinic base oil, and it is most preferable to use naphthenic base oil. This is because aroma oil has a large amount of aromatic component, so that it has a high affinity with the chemical, which is an aromatic compound, and further inhibits the reaction with a polymer, which is not preferable. Naphthenic base oil or paraffinic base oil has the effect of promoting diffusion and reaction in a polymer, and an oil with a low pour point diffuse easily into a polymer.

The classification of naphthenic base oil, paraffinic base oil, and aromatic base oil is determined by the CA value, the CP value, and the CN value. For example, TDAE, SRAE, RAE, and black oil are classified into naphthenic base oil, and spindle oil and paraffin oil are classified into paraffinic base oil.

A mixed oil of naphthenic base oil and naphthenic asphalt can also produce favorable effects.

The timing of blending these lubrication oils is not limited. For example, they may be blended by oil extension during the production of the rubber component or may be added during the kneading of the rubber composition.

### (Production of rubber composition)

The rubber composition according to the present disclosure can be produced by blending the rubber component with the filler and the thermoplastic resin, kneading the mixture together with other appropriately selected components, extruding or rolling the resultant mixture, and then vulcanizing it.

The kneading conditions are not limited, and various conditions such as the input volume of the kneading device, the rotation speed of the rotor, the ram pressure, the kneading temperature, the kneading time, and the type of the kneading device may be appropriately selected according to the purpose. Examples of the kneading device include a Banbury mixer, an intermixer, a kneader, and a roll.

The warming conditions are not limited, and various conditions such as the warming temperature, the warming time, and the warming device may be appropriately selected according to the purpose.

Examples of the warming device include a warming roll machine typically used for warming rubber compositions.

The extrusion conditions are not limited, and various conditions such as the extrusion time, the extrusion speed, extrusion device, and the extrusion temperature may be appropriately selected according to the purpose. Examples of the extrusion device include an extruder typically used for extrusion of rubber compositions for tires. The extrusion temperature may be determined as appropriate.

The device, method, conditions, etc. for performing the vulcanization are not limited, and may be appropriately selected according to the purpose. Examples of the vulcanization device include a molding vulcanizer with a mold typically used for vulcanization of rubber compositions for tires. As a vulcanization condition, the temperature is, for example, about 100 °C to 190 °C.

### <Tire>

A tire according to the present disclosure uses the above-described rubber composition according to the present disclosure. The inclusion of the rubber composition according to the present disclosure as a tire material can achieve excellent on-ice performance and steering stability.

The tire according to the present disclosure is not limited as long as the rubber composition according to the present disclosure is used in any of its tire members, and can be produced according to a usual method.

Examples of the gas with which the tire is filled include ordinary air, air with an adjusted partial pressure of oxygen, and inert gases such as nitrogen, argon, and helium.

The tire according to the present disclosure uses the above-described rubber composition according to the present disclosure in any of its tire members. Here, it is preferable to use the rubber composition according to the present disclosure in the tread rubber among the tire members. The use of the rubber composition according to the present disclosure in the tread rubber can further enhance the foregoing effects of improving the on-ice performance and steering stability.

### EXAMPLES

The presently disclosed techniques will be described in more detail below by way of examples, although the present disclosure is not limited to these examples.

### <Example 1, Comparative Example 1>

According to each formulation shown in Table 1, the components were blended and kneaded using a Banbury mixer to prepare a rubber composition sample. The blending amounts in Table 1 are in parts by mass with respect to 100 parts by mass of the rubber component.

Each obtained rubber composition sample was subjected to a production vulcanization process (temperature during vulcanization: 150 °C) to obtain a vulcanized rubber composition sample. Modified conjugated diene-based polymers A and B contained in the rubber composition samples were prepared in the following manner.

### (Preparation of modified conjugated diene-based polymer A)

In an 800 mL pressure-resistant glass container that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-ditetrahydrofurylpropane was added, and 0.8 mmol of n-butyllithium was added. Subsequently, the mixture was polymerized for 1.5 hours at 50 °C. Next, 0.72 mmol of [N,N-bis(trimethylsilyl)-(3-amino-1-propyl)](methyl)(diethoxy)silane was added to the polymerization reaction system when the polymerization conversion ratio reached nearly 100 %, and a modification reaction was carried out for 30 minutes at 50 °C. Subsequently, the reaction was stopped by adding 2 mL of an isopropanol solution containing 5 mass% of 2,6-di-t-butyl-p-cresol (BHT), and the reaction product was dried by a usual method to obtain modified conjugated diene-based polymer A.

The obtained modified conjugated diene-based polymer A had a vinyl content of 40 mass%, a bond styrene content of 10 mass%, and a peak top molecular weight (Mp) of 215 × 10³.

### (Preparation of modified conjugated diene-based polymer B)

(i) First, modifier compound (M-1) was obtained under the following conditions.
   80 mL of toluene solvent, 4.55 g (33.92 mmol) of terephthalaldehyde, and 15.02 g (67.84 mmol) of 3-aminopropyltriethoxysilane were charged into a 100 mL eggplant flask, and refluxed at 120 °C using a Dean-Stark apparatus. After the water had run out, the reflux was further continued for 2 hours. The mixture was then filtered, and the toluene solvent was distilled off under reduced pressure. After estimating the purity of the product by ¹H-NMR spectrum analysis and GC/MS analysis, it was used as modifier compound (M-1) of modified conjugated diene-based polymer B.
   ¹H-NMR (solvent: CDCl₃) chemical shift δ: 8.26 ppm (N=CH-Ph, 2H), 7.73 ppm (hydrogen on benzene ring, 4H), 3.80 ppm (CH₃-CH₂-O-, 12H), 3.61 ppm (Si-CH₂-CH₂-CH₂-N, 4H), 1.83 ppm (Si-CH₂-CH₂-CH₂-N, 4H), 1.20 ppm (CH₃-CH₂-O, 18H), 0.67 ppm (Si-CH₂-CH₂-CH₂-N, 4H) 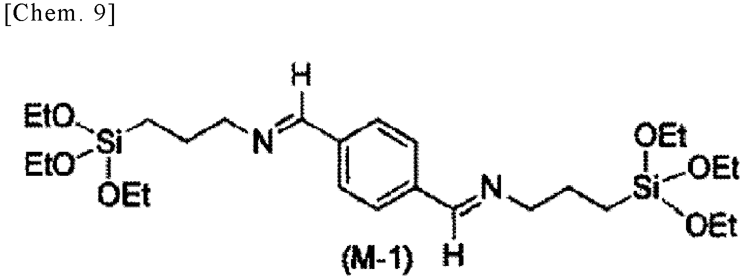
(ii) Next, 2,000 g of cyclohexane, 30.3 g of tetrahydrofuran, 23 g of styrene, and 420 g of 1,3-butadiene were charged into a nitrogen-purged autoclave reactor having an inner volume of 5 liters. After adjusting the temperature of the contents of the reactor to 10 °C, 6.26 mmol of n-butyllithium was added as a polymerization initiator, and 6.26 mmol of N-(trimethylsilyl)piperazine was added as a compound having a functional group that interacts with silica to initiate polymerization. The polymerization was carried out under adiabatic conditions and reached a maximum temperature of 85 °C. When the polymerization conversion reached 99 % (after 20 minutes from the start of polymerization), 10 g of 1,3-butadiene was added over 2 minutes, and then 2.79 mmol of modifier compound (M-1) was added and a reaction was performed for 15 minutes.

After this, 3.96 g of 2,6-di-tert-butyl-p-cresol was added to the polymer solution containing the modified conjugated diene-based polymer, then the solvent was removed by steam stripping, and drying was performed with a hot roll adjusted to 110 °C to obtain modified conjugated diene-based polymer B.

The obtained modified conjugated diene-based polymer B had a bound styrene content of 5 mass%, a vinyl bond content of the butadiene portion of 40 mass%, and a peak top molecular weight (Mp) of 120 × 10³.

### <Evaluation>

For each obtained rubber composition sample, a vulcanized rubber composition sample was obtained and then the following evaluation was conducted. Table 1 shows the evaluation results.

### (1) On-ice performance

For the vulcanized rubber composition sample of Example 1, the storage shear elastic modulus G' (Pa) was measured using a dynamic mechanical analyzer (TA Corporation) under the conditions of -20 °C, strain of 1 %, and frequency of 10 Hz.

For the vulcanized rubber composition sample of Comparative Example 1, the storage shear elastic modulus G' (Pa) was measured using a dynamic mechanical analyzer (TA Corporation) under the conditions of -20 °C, strain of 1 %, and frequency of 10 Hz.

The obtained value of G' is expressed as an index where the value of Comparative Example 1 is 100, and is shown in Table 1. A larger index value of G' indicates better on-ice performance when the rubber composition is used in tires.

### (2) Steering stability

For the vulcanized rubber composition sample of Example 1, the storage shear elastic modulus G' (Pa) was measured using a high-frequency dynamic viscoelasticity measuring device produced by Metravib under the conditions of 30 °C, strain of 72 %, and frequency of 15 Hz.

For the vulcanized rubber composition sample of Comparative Example 1, the storage shear elastic modulus G' (Pa) was measured using a high-frequency dynamic viscoelasticity measuring device produced by Metravib under the conditions of 30 °C, strain of 72 %, and frequency of 15 Hz.

The obtained value of G' is expressed as an index where the value of Comparative Example 1 is 100, and is shown in Table 1. A larger index value of G' indicates better steering stability when the rubber composition is used in tires.

### (3) Balance between on-ice performance and steering stability

For Example 1, the average of the evaluation results (index values) of (1) and (2) above was used as an index for evaluating the balance between on-ice performance and steering stability.

For Comparative Example 1, the average of the evaluation results (index values) of (1) and (2) above was used as an index for evaluating the balance between ice performance and steering stability.

Thus, the average of the evaluation results (index values) of (1) and (2) above was used as an index for evaluating the balance between ice performance and steering stability in each case.

A larger index value indicates that both ice performance and steering stability are achieved at a higher level.

**[Table 1]**

| | | Comparative Example 1 | Example 1 |
|---|---|---|---|
| Components (parts by mass) | Natural rubber *1 | 50 | 50 |
| | Modified conjugated diene-based polymer A | 50 | - |
| | Modified conjugated diene-based polymer B | - | 50 |
| | Carbon black *2 | 7 | 7 |
| | Silica *3 | 66 | 66 |
| | Resin *4 | 10 | 10 |
| | Zinc oxide *5 | 2.5 | 2.5 |
| | Age resistor A *6 | 1.82 | 1.82 |
| | Silane coupling agent *7 | 6.6 | 6.6 |
| | Age resistor B *8 | 1.82 | 1.82 |
| | Vulcanization accelerator A *9 | 0.8 | 0.8 |
| | Vulcanization accelerator B *10 | 0.75 | 0.75 |
| | Vulcanization accelerator C *11 | 1.65 | 1.65 |
| | Sulfur | 1.75 | 1.75 |
| | Others*12 | 8.21 | 8.21 |
| Evaluation | On-ice performance | 100 | 154 |
| | Steering stability | 100 | 101 |
| | Balance evaluation | 100 | 128 |

| | | | |
|---|---|---|---|
| *1 Natural rubber: RSS#3 *2 Carbon black: "Asahi #80" produced by Asahi Carbon Co., Ltd. *3 Silica: Silica with CTAB specific surface area of 195 m²/g *4 Resin: Aromatic hydrocarbon resin, "T-REZ RD104" produced by Tonen Chemical Corporation *5 Zinc oxide: "Two types of zinc oxide" produced by Hakusui Tech Co., Ltd. *6 Age resistor A: "Antigen 6C" produced by Sumitomo Chemical Co., Ltd. *7 Silane coupling agent: "ABC-856" produced by Shin-Etsu Chemical Co., Ltd. *8 Age resistor B: "NONFLEX RD-S" produced by Seiko Chemical Co., Ltd. *9 Vulcanization accelerator A: "SOXINOL D-G" produced by Sumitomo Chemical Co., Ltd. *10 Vulcanization accelerator B: "SANCELER DM-TG" produced by Sanshin Chemical Industry Co., Ltd. *11 Vulcanization accelerator C: "NOCCELER NS-P" produced by Ouchi Shinko Chemical Industrial Co., Ltd. *12 Others: The total amount of stearic acid, oil, wax, fatty acid metal salt, and processing aid, and the blending amount of each component were the same in Example 1 and Comparative Example 1. | | | |

It can be understood from the results in Table 1 that each rubber composition sample corresponding to Example exhibited excellent ice performance and steering stability in a well-balanced manner.

### INDUSTRIAL APPLICABILITY

It is thus possible to provide a rubber composition that can achieve excellent on-ice performance and steering stability when used in tires. It is also possible to provide a tire having excellent on-ice performance and steering stability.

## Claims

1. A rubber composition comprising:
a rubber component containing an isoprene-based rubber, and a modified conjugated diene-based polymer that is a reaction product of a conjugated diene-based polymer having an active terminal and a compound [M] containing a total of two or more of at least one selected from a group "-CR¹=N-A¹" and a group "-N=CR¹-A¹", where R¹ is a hydrogen atom or a hydrocarbyl group and A¹ is a monovalent group having an alkoxysilyl group;
a filler containing at least silica; and
5 parts by mass or more of a thermoplastic resin with respect to 100 parts by mass of the rubber component.

2. The rubber composition according to claim 1, wherein the modified conjugated diene-based polymer is represented by the following formula (3) 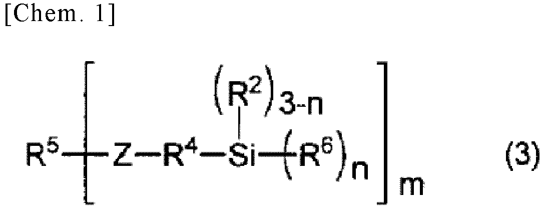 where R² is a hydrocarbyl group having a carbon number of 1 to 20, R⁶ is a hydrocarbyloxy group having a carbon number of 1 to 20 or a modified or unmodified conjugated diene-based polymer chain, R⁴ is an alkanediyl group having a carbon number of 1 to 20, Z is a group represented by the following formula (4) or formula (5), R⁵ is an m-valent hydrocarbyl group having a carbon number of 1 to 20 or an m-valent group having a carbon number of 1 to 20 and containing at least one atom selected from the group consisting of a nitrogen atom, an oxygen atom, and a sulfur atom and not containing an active hydrogen, n is an integer of 1 to 3, m is an integer of 2 to 10, and a plurality of R², R⁴, R⁶, Z, and n are same or different, 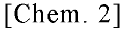 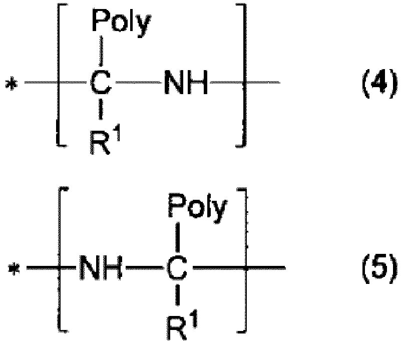 where R¹ is a hydrogen atom or a hydrocarbyl group, Poly is a modified or unmodified conjugated diene-based polymer chain, and "*" indicates an atomic bond that binds to R⁵.

3. The rubber composition according to claim 1 or 2, wherein the conjugated diene-based polymer contains an aromatic vinyl unit and a conjugated diene-based unit, and a proportion of the aromatic vinyl unit in the conjugated diene-based polymer is 10 mass% or less.

4. The rubber composition according to any one of claims 1 to 3, wherein the modified conjugated diene-based polymer has a peak top molecular weight of less than 1.0 × 10⁶ at a peak with a lowest molecular weight measured by gel permeation chromatography (GPC).

5. A tire using the rubber composition according to any one of claims 1 to 4.
